# EUROPEAN PATENT SPECIFICATION

(11) **EP 3 877 462 B1**
(45) Date of publication and mention of the grant of the patent: **17.12.2025**
(21) Application number: 19797303.5
(22) Date of filing: 07.11.2019
(51) Int. Cl.: C08L 11/02, C08L 15/02

(54) **RUBBER COMPOSITION FOR INNER LINER**
KAUTSCHUKZUSAMMENSETZUNG FÜR INNENVERKLEIDUNG
COMPOSITION DE CAOUTCHOUC POUR REVÊTEMENT INTERNE

(30) Priority: 09.11.2018 LU 100994
(43) Date of publication of application: 15.09.2021
(73) Proprietor: Apollo Tyres Global R&D B.V., 7521 PT Enschede (NL)
(72) Inventor: MONDAL, Anup, 7521 PT Enschede (NL); REUVEKAMP, Louis, 7521 PT Enschede (NL); STEVEN, Hendrik, 7521 PT Enschede (NL); SINGH, Vikram, 7521 PT Enschede (NL)
(74) Representative: Michalski Hüttermann & Partner Patentanwälte mbB
(86) International application number: PCT/EP2019/080560
(87) International publication number: WO 2020/094795

(56) References cited:
- EP-A1- 1 942 136
- EP-A1- 1 942 136
- EP-A1- 2 871 068
- EP-A1- 2 871 068
- US-A1- 2012 035 325
- US-A1- 2012 035 325
- US-B2- 8 240 351
- US-B2- 8 450 396
- US-B2- 8 450 396

## Description

The present invention relates to a cross-linkable rubber composition, a cross-linked rubber composition obtained by cross-linking such a rubber composition, a method of preparing a tyre and a tyre comprising an inner liner.

Butyl rubbers and halogenated butyl rubber such as chlorinated butyl rubber or brominated butyl rubber, carbon black and the like have been conventionally used as the compounding agent of a rubber composition used for production of the inner liner of a tire. Yet, it remains a challenge to reduce the rolling resistance of a tyre by making improvements to the inner liner compounds. Fillers like carbon black negatively impact the hysteresis property. Hysteresis is the primary cause of the rolling resistance of a pneumatic tyre.

A rubber for a tyre inner liner can be optimized to exhibit good hysteresis property by using low filler amount, but this normally results in poor physical properties like air permeability. On the other hand, by changing the polymer blend the hysteresis property will be improved, but this leads to impairment in the physical properties like air permeability. In order to obtain a good inner liner, these properties need to be balanced simultaneously.

EP0489851 discloses a butyl rubber composition which exhibits improved adhesion to pre-treated polyester textile materials, while at the same time important physical properties of cured butyl rubber such as modulus, tensile strength and elongation are maintained or even enhanced. The vulcanizable composition is based on a blend of butyl rubber and minor amounts of a copolymer of ethylene with a lower alkyl acrylate or methacrylate, or a terpolymer of ethylene, a lower alkyl acrylate or methacrylate and acrylic or methacrylic acid. The composition exhibits improved adhesion to pre-treated polyester textile materials. The document also relates to laminates of the butyl rubber compositions of this invention with polyester textile materials such as yarns and woven fabrics.

JP 2017-110161 A describes a rubber composition comprising a diene rubber, a ternary copolymer of ethylene, (meth) acrylic acid ester and maleic anhydride, acid-modified polyolefin, and at least one filler selected from the group consisting of carbon black and white filler, wherein based on 100 parts per mass of diene rubber, the total content of the ternary copolymer and the acid-modified polyolefin is 3 to 30 parts per mass. Further a pneumatic tire formed by using the rubber composition is described.

EP 2 871 068 A1 describes a laminate for tires, which is capable of suppressing the occurrence of cracks in a splice section of an inner liner after traveling when the laminate for tires is used as the inner liner of a pneumatic tire. US 8450396 B2 describes a durable, flexible, impermeable thermoplastic elastomer composition that is produced using a dynamic vulcanization process conducted in a high shear mixer at elevated temperature. EP 1 942 136 A1 describes nanocomposites and processes for making nanocomposites comprising butyl rubber ionomers having at least 3.5 mol% of repeating units derived from a multiolefin monomer, such as isoprene. EP 2 871 068 A1, US 8 450 396 B2, US 2012/035325 A1, EP 1 942 136 A1 and US 8 240 351 B2 also disclose crosslinkable rubber compositions.

Optimizing the hysteresis property normally results in trade-off in physical properties. The present invention has the object to provide a rubber composition to be used in a tyre inner liner to serve well in view of low hysteresis and good physical property.

This object is achieved by a cross-linkable rubber composition according to claim 1, a cross-linked rubber composition according to claim 10, a method according to claim 12 and a tyre comprising an inner liner according to claim 13. Advantageous embodiments are the subject of dependent claims. They may be combined freely unless the context clearly indicates otherwise.

Accordingly, a cross-linkable rubber composition is provided, the cross-linkable rubber composition comprising a halogenated butyl rubber, a filler, and a resin, wherein the resin is a terpolymer of ethylene, acrylic ester and maleic anhydride and is present in an amount ranging from ≥ 1 phr to ≤ 20 phr, and wherein the composition further comprises a natural rubber.

In the context of this invention the unit "phr" denotes "per hundred parts by weight of rubber", as it is commonly understood in the art. It is further understood that in formulations discussed in connection with the present invention the phr amount of all rubber components adds up to 100.

It has surprisingly been found that using a terpolymer of ethylene, acrylic ester and maleic anhydride as resin in a carefully chosen phr amount reduces the Payne effect, and achieves a lower hysteresis, while maintaining good physical property like air permeability. The cross-linkable rubber composition is particularly usable for manufacturing a tyre inner liner.

The terpolymer of ethylene, acrylic ester and maleic anhydride may be selected from a terpolymer of ethylene/ ethyl acrylate/ maleic anhydride; ethylene/ methyl acrylate/ maleic anhydride; and ethylene/ butyl acrylate/ maleic anhydride. Suitable terpolymers of ethylene, acrylic ester and maleic anhydride are sold under the tradename of "Lotader" from Arkema.

The cross-linkable rubber composition according to the invention comprises cross-linkable groups in the rubber component(s). They may be cross-linked (cured, vulcanised) by methods known to a skilled person in the rubber technology field. The cross-linkable rubber compositions may be sulfur-vulcanizable and/or peroxide-vulcanizable. Other vulcanization systems may also be used. If desired, additives can be added. Examples of usual additives are stabilizers, antioxidants, lubricants, dyes, pigments, flame retardants, conductive fibres, homogenizing resins, tackifying agents and reinforcing fibres.

According to a preferred embodiment, the halogenated butyl rubber is selected from chlorinated butyl rubber or brominated butyl rubber. Butyl rubber and its halogenated derivatives containing chlorine or bromine incorporated into the polymer structure are generally known in the art. Producing a halogenated butyl rubber is accomplished commercially by preparing a solution of butyl rubber which is subsequently halogenated. Halogenated butyl rubber, also denoted halobutyl rubber, such as chlorinated butyl rubber (chlorobutyl rubber) and brominated butyl rubber (bromobutyl rubber) are commercially available.

According to one embodiment, the halogenated butyl rubber is present in an amount of at least 60 phr. The halogenated butyl rubber may be present in an amount ranging from ≥ 60 to ≤ 120 phr, preferably ≥ 80 to ≤ 100 phr.

The composition further comprises a natural rubber (NR). The NR in the rubber component may contain one type of NR rubber or several different types.

According to one embodiment, the natural rubber is present in an amount of ≤ 40 phr.

According to one embodiment, the filler is or comprises a reinforcing filler selected from carbon black or silica. Reinforcing fillers in cross linked rubber compositions provide significant improvements in demanding performance requirements, in particular in relation to resistance to wear. They impart a degree of strengthening to the rubber network, leading to considerable enhancement in tensile strength, modulus, as well as an increase in endurance.

According to one embodiment, the reinforcing filler is present in an amount ranging from ≥ 40 to ≤ 70 phr.

According to one embodiment, the filler further comprises a non-reinforcing filler selected from the group of china clay, talc or rice husk.

According to one embodiment, the non-reinforcing filler is present in an amount ranging from ≥ 10 to ≤ 30 phr.

According to a further embodiment, the rubber composition comprises a syndiotactic 1, 2- polybutadiene. The syndiotactic 1, 2- polybutadiene may be present in an amount ranging from ≥ 5 phr to ≤ 20 phr, preferably from ≥ 10 phr to ≤ 20 phr. Adding syndiotactic 1, 2- polybutadiene may improve air permeability of the cured rubber composition.

According to one embodiment, the terpolymer of ethylene, acrylic ester and maleic anhydride is present in an amount in a range of ≥ 5 to ≤ 15 phr.

Another aspect of the present invention relates to a cross-linked rubber composition obtained by cross-linking a rubber composition according to the invention.

In an embodiment, the cross-linked rubber composition has an air permeability (determined according to ISO 2393) ranging from ≥ 40 cm²/Pas to ≤ 60 cm²/Pas. In further embodiments, particularly in embodiments comprising a syndiotactic 1, 2-polybutadiene, the cross-linked rubber composition has an air permeability (determined according to ISO 2393) ranging from ≥ 30 cm²/Pas to ≤ 40 cm²/Pas, preferably from ≥ 30 cm²/Pas to ≤ 35 cm²/Pas.

In another embodiment, the cross-linked rubber composition has a rebound value ranging from ≥ 31% to ≤ 44%.

The present invention also relates to a method of preparing a tyre, comprising the steps of:
- providing a tyre assembly comprising a rubber composition according to the invention; and
- cross-linking at least the rubber composition according to the invention in the tyre assembly.

The present invention also encompasses a tyre comprising an inner liner, wherein the inner liner comprises a cross-linked rubber composition according to the invention.

The invention will be further described with reference to the following examples without wishing to be limited by them.

### Methods:

Air Permeability test was based upon ISO 2393 and was measured using a measuring cell in a water bath. Air pressure was kept at 5 bar and water bath temperature was set up at 65°C. A circular sample of 13cm diameter with a thickness between 0.5mm and 0.9mm was prepared and vulcanized at 160°C for 20 minutes with pressure of 320 kN. The specimen was held in the system for one night for conditioning and the volume of gas coming out was measured every 10 minutes for 1 hour.

Payne effect: The storage shear moduli (G') was evaluated by using Rubber Process Analyzer (RPA 2000) (Alpha Technologies, Akron, USA) at a temperature of 100 °C, a constant frequency of 0.5 Hz and by strain sweep up to 100%. The Payne effect was calculated from different storage shear moduli at low strain (0.56%) and high strain (100%). Samples were prepared from unvulcanised sheet as round disk of 28 mm diameter and 8 mm thickness.

Rebound: Rebound measurements were performed for cured samples on a Bareiss digi test II Rebound Resilience Tester at a temperature of 70°C. Samples were cured at 170°C for 12 minutes as round shape of 28 mm diameter and 12 mm thickness.

In accordance with the preceding, cross-linkable rubber compositions were prepared as described in the examples 1 and 2 and cross-linked. Materials mentioned in the tables were:
The halogenated butyl rubber was Bromobutyl rubber with a specific gravity in the range of ≥ 0.9 to ≤ 1.0. The supplier for Bromobutyl rubber was selected from Arlanxeo, Exxon Mobil Corporation or Shandong Chambroad Petrochemicals Co. Ltd The terpolymer of ethylene, acrylic ester and maleic anhydride was LOTADER^{®} 3430 (Arkema).

The NR rubber used was a Technically Specified Rubber (TSR) 20 with a dirt content in an amount ranging from ≥ 10 to ≤ 20%. The supplier for TSR 20 was selected from the group of Compagnie Des Cautchoucs du Pakadie, EXAT Agriculture, Societe Africaine Forestiere et Agricole du Cameroun (SAFACAM), Ghana Rubber Estates Limited (GREL), Sintongthai Rubber Co. Ltd, PT Hok Tong or Halcyon Agri Corporation Limited.

The reinforcing filler was N660 General Purpose Furnace (GPF) Carbon Black.

The non-reinforcing filler was China clay.
Residual Aromatic Extract (RAE) was a high viscosity aromatic process oil
Koresin^{®} (BASF), aliphatic resin and pheno formaldehyde resin were used as a tackifier

In accordance with the preceding, cross-linkable rubber compositions were prepared as described in the tables below. In a first step, all rubber components were added and mixed, followed by a second step wherein all additives were added and mixed and a last step wherein the curing package was added.

### Example 1

The table below shows compositions using only bromobutyl rubber as the rubber component. Amounts for the components are given in PHR. The rubber composition R is a reference composition. The composition I1 is a composition with a higher amount of RAE process oil along with the terpolymer of ethylene, acrylic ester and maleic anhydride (Lotader^{®}) and the composition I2 is a composition with the same amount of RAE process oil with lower Carbon black as the reference and the terpolymer of ethylene, acrylic ester and maleic anhydride (Lotader^{®}).

| Components | Reference R1 amount (PHR) | I1 amount (PHR) | I2 amount (PHR) |
|---|---|---|---|
| Bromobutyl rubber | 100 | 100 | 100 |
| RAE Process oil, Free of labeling | 8 | 10 | 8 |
| N660 GPF Carbon Black | 60 | 60 | 50 |
| China Clay - 8 m2/g | | | |
| Sulphur Soluble Fg No.1 0.5% Oil Based | 0.4 | 0.4 | 0.4 |
| MBTS | 1.3 | 1.3 | 1.3 |
| DCBS | | | |
| Zinc Oxide | 2.75 | 2.75 | 2.75 |
| Stearic Acid (Flake Form) | 2 | 2 | 2 |
| Struktol 40MS (Flake Form) | 4 | 4 | 4 |
| Aliphatic Resin | 5 | | |
| Phenol Formaldehyde Resin | | 3 | 3 |
| Lotader | | 10 | 10 |

Mercaptobenzothiazole Sulfenamide (MBTS) is used as an accelerator 1.

Dicyclohexyl benzothiazole sulfenamide (DCBS) is used as an accelerator 2.

Struktol 40MS is a hydrocarbon blend and used as a process aid.

The following table shows the results obtained from the cured rubber compositions:

| Result | | R1 | I1 | I2 |
|---|---|---|---|---|
| Hardness (median) | °Sh A | 48.80 | 55.10 | 50.30 |
| Air Permeability | am²/Pas | 42.96 | 47.39 | 45.87 |
| Payne Effect G'0.56 (100°C) | | 0.38 | 0.31 | 0.23 |
| Rebound (70°C) | % | 28.80 | 35.00 | 36.50 |

A higher rebound value suggests that the compound have lower damping property and better rolling resistance.

A lower value of G' at 0.56 strain hints to less filler-filler interaction and therefore depicts lower hysteresis property of the compound.

As can be taken from the results above, the addition of Lotader resulted in an increase in the results for air impermeability value. Higher air impermeability value indicates less air retention.

Furthermore, addition of Lotader to the composition increases the hardness of the compound I1 and I2 with respect to reference R1.

### Example 2

The table below shows the composition I3 in comparison to a composition I4 with the terpolymer of ethylene, acrylic ester and maleic anhydride (Lotader^{®}) using a natural rubber as second rubber component. Amounts for the components are given in PHR.

| Components | Reference R2 amount (PHR) | I3 amount (PHR) | I4 amount (PHR) |
|---|---|---|---|
| TSR 20 | 15 | 15 | 15 |
| Bromobutyl rubber | 85 | 85 | 85 |
| RAE Process oil, Free of labeling | 6 | 6 | 5 |
| N660 GPF Carbon Black | 60 | 60 | 50 |
| China Clay - 8 m2/g | 20 | 20 | 20 |
| Sulphur Soluble Fg No.1 0.5% Oil Based | 0.5 | 0.5 | 0.5 |
| MBTS | 1 | 1 | 1 |
| DCBS | 1 | 1 | 1 |
| Zinc Oxide | 3 | 3 | 3 |
| Stearic Acid (Flake Form) | 1 | 1 | 1 |
| Struktol 40MS (Flake Form) | 5 | 5 | 5 |
| Koresin | 3 | 3 | 3 |
| Lotader | | 10 | 10 |

The following table shows the results obtained from the cured rubber compositions:

| Result | | R2 | I3 | I4 |
|---|---|---|---|---|
| Hardness (median) | °Sh A | 58.50 | 63.10 | 60.90 |
| Air Permeability | am²/Pas | 57.12 | 59.41 | 58.03 |
| Payne Effect G'0.56 (100°C) | | 0.49 | 0.42 | 0.32 |
| Rebound (70°C) | % | 33.90 | 39.40 | 41.00 |

As can be seen from this table, a small amount of natural rubber added to the composition comprising Lotader^{®} terpolymer improved the rolling resistance.

Such cross-linked rubber compositions are particularly usable for manufacturing a tyre inner liner.

### Example 3

The table below shows the composition I5 and I6 in comparison to a reference composition R3. The composions I5 and I6 comprise the terpolymer of ethylene, acrylic ester and maleic anhydride (Lotader^{®}) and a syndiotactic 1, 2- polybutadiene. Amounts for the components are given in PHR.

| Components | Reference R3 amount (PHR) | I5 amount (PHR) | I6 amount (PHR) |
|---|---|---|---|
| Bromobutyl rubber | 100 | 100 | 100 |
| N-660 (GPF) Carbon Black | 50 | 50 | 40 |
| Stearic acid, Rubber grade | 1 | 1 | 1 |
| China Clay | 20 | 20 | 20 |
| Sulphur (Soluble, 1% Oil treated) | 0.40 | 0.40 | 0.40 |
| Polyterpene Resin | 7 | 7 | 7 |
| Zinc Oxide | 2 | 2 | 2 |
| MBTS (Mercaptobezothiazole Disulfide) | 0.9 | 0.9 | 0.9 |
| LOTADER^{®} 3430 resin | - | 10 | 10 |
| AT 400 | 10 | 10 | 10 |

The syndiotactic 1, 2- polybutadiene was AT 400 syndiotactic 1,2-butadiene supplied by JSR Corporation.

The following table shows the results obtained from the cured rubber compositions of R3, I5 and I6:

| Result | | R3 | I5 | I6 |
|---|---|---|---|---|
| Hardness (median) | °Sh A | 61.50 | 69.70 | 65.40 |
| Air Permeability rubber 20' at 160°C | am²/Pas | 28.08 | 30.28 | 31.34 |
| Payne Effect G'0.56 (100°C) | | 0.43 | 0.39 | 0.30 |
| Rebound (70°C) | % | 36.50 | 39.40 | 41.70 |

As can be seen from this table, results for air permeability were improved for the rubber composition when a syndiotactic 1, 2-butadiene rubber was added to the composition comprising Lotader^{®} terpolymer. This is particularly usable for manufacturing a tyre inner liner.

## Claims

1. A cross-linkable rubber composition, the cross-linkable rubber composition comprising:
a halogenated butyl rubber,
a filler, and
a resin,
**characterised in that**
the resin is a terpolymer of ethylene, acrylic ester and maleic anhydride and is present in an amount ranging from ≥ 1 to ≤ 20 phr, and wherein the composition further comprises a natural rubber.

2. The rubber composition according to claim 1, wherein the halogenated butyl rubber is selected from chlorinated butyl rubber or brominated butyl rubber.

3. The rubber composition according to one of claims 1 or 2, wherein the halogenated butyl rubber is present in an amount of at least 60 phr.

4. The rubber composition according to one of claims 1 to 3, wherein the natural rubber is present in an amount of ≤ 40 phr.

5. The rubber composition according to one of claims 1 to 4, wherein the filler is or comprises a reinforcing filler selected from carbon black or silica, wherein preferably the reinforcing filler is present in an amount ranging from ≥ 40 to ≤ 70 phr.

6. The rubber composition according to claim 5, wherein the filler further comprises a non-reinforcing filler selected from the group of china clay, talc and rice husk, wherein preferably the non-reinforcing filler is present in an amount ranging from ≥ 10 to ≤ 30 phr.

7. The rubber composition according to one of claims 1 to 6, wherein the composition comprises a syndiotactic 1, 2- polybutadiene.

8. The rubber composition according to claim 7, wherein the syndiotactic 1, 2-polybutadiene is present in an amount ranging from ≥ 5 to ≤ 20 phr.

9. The rubber composition according to one of claims 1 to 8, wherein the terpolymer of ethylene, acrylic ester and maleic anhydride is present in an amount in a range of ≥ 5 to ≤ 15 phr.

10. A cross-linked rubber composition, **characterised in that** it is obtained by cross-linking a rubber composition according to one of claims 1 to 9.

11. The cross-linked rubber composition according to claim 10 with a rebound value (determined with Bareiss digi test II Rebound Resilience Tester at 70°C) ranging from ≥ 31% to ≤ 44%.

12. A method of preparing a tyre, comprising the steps of:
- providing a tyre assembly comprising a cross-linkable rubber composition according to one of claims 1 to 9; and
- cross-linking at least the cross-linkable rubber composition according to one of claims 1 to 9 in the tyre assembly.

13. A tyre comprising an inner liner, **characterised in that** the inner liner comprises a cross-linked rubber composition according to one of claims 10 to 11.

## Patentansprüche

1. Vernetzbare Kautschukzusammensetzung, wobei die vernetzbare Kautschukzusammensetzung Folgendes umfasst:
einen halogenierten Butylkautschuk;
einen Füllstoff, und
ein Harz,
**dadurch gekennzeichnet, dass**
das Harz ein Terpolymer von Ethylen, Acrylsäureester und Maleinsäureanhydrid ist und in einem Anteil im Bereich von ≥ 1 phr bis ≤ 20 phr vorliegt, und wobei die Zusammensetzung weiterhin einen Naturkautschuk aufweist.

2. Kautschukzusammensetzung nach Anspruch 1, wobei der halogenierte Butylkautschuk ausgewählt ist aus chlororiertem Butylkautschuk oder bromiertem Butylkautschuk.

3. Kautschukzusammensetzung nach Anspruch 1 oder 2, wobei der halogenierte Butylkautschuk in einem Anteil von wenigstens 60 phr vorliegt.

4. Kautschukzusammensetzung nach einem der Ansprüche 1 bis 3, wobei der Naturkautschuk in einem Anteil von ≤ 40 phr vorliegt.

5. Kautschukzusammensetzung nach einem der Ansprüche 1 bis 4, wobei der Füllstoff ein Verstärkerfüllstoff ausgewählt aus Carbon Black oder Silica ist oder diese enthält, wobei der Verstärkerfüllstoff vorzugsweise in einem Anteil im Bereich von ≥ 40 phr bis ≤ 70 phr vorliegt.

6. Kautschukzusammensetzung nach Anspruch 5, wobei der Füllstoff weiterhin einen nicht-verstärkenden Füllstoff ausgewählt aus der Gruppe von Kaolin, Talkum und Reishülsen enthält, wobei der nicht-verstärkende Füllstoff vorzugsweise in einem Anteil im Bereich von ≥ 10 phr bis ≤ 30 phr vorliegt.

7. Kautschukzusammensetzung nach einem der Ansprüche 1 bis 6, wobei die Zusammensetzung ein syndiotaktisches 1,2-Polybutadien enthält.

8. Kautschukzusammensetzung nach Anspruch 7, wobei das syndiotaktische 1,2-Polybutadien in einem Anteil im Bereich von ≥ 5 phr bis ≤ 20 phr vorliegt.

9. Kautschukzusammensetzung nach einem der Ansprüche 1 bis 8, wobei das Terpolymer von Ethylen, Acrylsäureester und Maleinsäureanhydrid in einem Anteil im Bereich von ≥ 5 phr bis ≤ 15 phr vorliegt.

10. Vernetzte Kautschukzusammensetzung, **dadurch gekennzeichnet, dass** sie durch Vernetzen einer Kautschukzusammensetzung nach einem der Ansprüche 1 bis 9 erhalten wird.

11. Vernetzte Kautschukzusammensetzung nach Anspruch 10 mit einem Rückprallwert (bestimmt mit einem Bareiss digi test II Rebound Resilience Tester bei 70°C) im Bereich von ≥ 31% bis ≤ 44%.

12. Verfahren zur Herstellung eines Reifens, das folgende Schritte umfasst:
- Bereitstellen einer Reifenanordnung, die eine vernetzbare Kautschukzusammensetzung nach einem der Ansprüche 1 bis 9 umfasst; und
- Vernetzen mindestens der vernetzbaren Kautschukzusammensetzung nach einem der Ansprüche 1 bis 9 in der Reifenanordnung.

13. Reifen aufweisend einen Innerliner, **dadurch gekennzeichnet, dass** der Innerliner eine vernetzte Kautschukzusammensetzung nach einem der Ansprüche 10 bis 11 umfasst.

## Revendications

1. Composition de caoutchouc réticulable, la composition de caoutchouc réticulable comprenant :
un caoutchouc butyle halogéné,
une charge, et
une résine,
**caractérisée en ce que**
la résine est un terpolymère d'éthylène, d'ester acrylique et d'anhydride maléique et est présente en une quantité allant de ≥ 1 à ≤ 20 phr, et dans laquelle la composition comprend en outre un caoutchouc naturel.

2. Composition de caoutchouc selon la revendication 1, dans laquelle le caoutchouc butyle halogéné est choisi parmi le caoutchouc butyle chloré ou le caoutchouc butyle bromé.

3. Composition de caoutchouc selon l'une des revendications 1 ou 2, dans laquelle le caoutchouc butyle halogéné est présent en une quantité d'au moins 60 phr.

4. Composition de caoutchouc selon l'une des revendications 1 à 3, dans laquelle le caoutchouc naturel est présent en une quantité de ≤ 40 phr.

5. Composition de caoutchouc selon l'une des revendications 1 à 4, dans laquelle la charge est ou comprend une charge de renforcement choisie parmi le noir de carbone ou la silice, dans laquelle de préférence la charge de renforcement est présente en une quantité allant de ≥ 40 à ≤ 70 phr.

6. Composition de caoutchouc selon la revendication 5, dans laquelle la charge comprend en outre une charge non de renforcement choisie dans le groupe constitué par l'argile de chine, le talc et l'enveloppe de riz, dans laquelle, de préférence, la charge non de renforcement est présente en une quantité allant de ≥ 10 à ≤ 30 phr.

7. Composition de caoutchouc selon l'une des revendications 1 à 6, dans laquelle la composition comprend un 1,2-polybutadiène syndiotactique.

8. Composition de caoutchouc selon la revendication 7, dans laquelle le 1,2-polybutadiène syndiotactique est présent en une quantité allant de ≥ 5 à ≤ 20 phr.

9. Composition de caoutchouc selon l'une des revendications 1 à 8, dans laquelle le terpolymère d'éthylène, d'ester acrylique et d'anhydride maléique est présent en une quantité dans une plage de ≥ 5 à ≤ 15 phr.

10. Composition de caoutchouc réticulée, **caractérisée en ce qu'elle** est obtenue par réticulation d'une composition de caoutchouc selon l'une des revendications 1 à 9.

11. Composition de caoutchouc réticulé selon la revendication 10, ayant une valeur de rebond (déterminée avec l'appareil de test de résilience au rebond Bareiss digi test II à 70 °C) allant de ≥ 31 % à ≤ 44 %.

12. Procédé de préparation d'un pneumatique, comprenant les étapes de :
- fourniture d'un ensemble pneumatique comprenant une composition de caoutchouc réticulable selon l'une des revendications 1 à 9 ; et
- réticulation au moins de la composition de caoutchouc réticulable selon l'une des revendications 1 à 9 dans l'ensemble pneumatique.

13. Pneumatique comprenant une garnitures intérieures, **caractérisé en ce que** la garniture intérieure comprend une composition de caoutchouc réticulée selon l'une des revendications 10 à 11.
